# EUROPEAN PATENT APPLICATION

(11) **EP 2 889 536 A1**
(43) Date of publication of application: **01.07.2015**
(21) Application number: 13831450.5
(22) Date of filing: 08.03.2013
(51) Int. Cl.: F23B 90/00, C10L 5/00

(54) **METHOD FOR UTILIZING ALUMINUM AS FUEL**

(30) Priority: 22.08.2012 JP 2012183301
(71) Applicant: Japan Expert Clone Corp., Tokyo 160-0022 (JP); The University of Tokyo, Bunkyo-ku, Tokyo 113-8654 (JP); Tokyo Metropolitan University, Municipal University Corp., Tokyo 163-0926 (JP)
(72) Inventor: GOTO Tetsuya, Tokyo 160-0022 (JP); ARAKAWA Yoshihiro, Tokyo 113-8654 (JP); TAKAHASHI Shuhei, Gifu-shi, Gifu 501-1193 (JP); NAKANO Masakatsu, Tokyo 116-0003 (JP); MATSUI Makoto, Hamamatsu-shi Shizuoka 432-8011 (JP)
(74) Representative: Hedges, Martin Nicholas
(86) International application number: PCT/JP2013/056405
(87) International publication number: WO 2014/030368

(57) **Abstract**

The purpose of the present invention is to provide new renewable energy by utilizing aluminum, which is easy to store and is stably suppliable, as a fuel without harming the environment or the human body. An aluminum powder and oxygen are introduced into a combustion chamber and subjected to stationary combustion, and the generated energy is taken out and utilized. The stationary combustion of aluminum is conducted by controlling either or both of the amounts of the aluminum powder and oxygen which are to be introduced into the combustion chamber. The control of the amount of the aluminum powder is accomplished by controlling the amount of the aluminum powder to be sucked into a jet stream of a carrier gas for introducing the powder into the combustion chamber or by controlling the amount of an impurity to be mixed with the aluminum powder. The control of the amount of the oxygen is accomplished by controlling the mixing ratio of the amount thereof to the amount of a diluent gas to be introduced simultaneously. The alumina resulting from the combustion is recovered, and aluminum obtained by reducing the alumina can be recycled as a fuel.

## Description

The present invention relates to a method for utilizing aluminum as a new energy resource by grasping aluminum as a "fuel" or an "energy source", and effectively utilizing a high quantity of heat that is generated when aluminum is combusted. Further, by recovering alumina (aluminum oxide) that is created as a result of combustion of aluminum and re-utilizing aluminum obtained through reduction of the alumina, a new energy circulation system as renewable energy through utilizing aluminum may be established.

As for supply sources of electric power that is the major energy in this country, thermal power generation (using coal, petroleum or natural gas) accounts for about 60%, nuclear power generation accounts for about 30%, and hydroelectric power generation or the like accounts for the rest. From the global perspective, it is stated that thermal power generation accounts for a little less than 70%, and nuclear power generation accounts for about 15% (in 2009). Among them, thermal power generation that accounts for an overwhelming percentage in the world generates inevitably greenhouse effect gases along with combustion of fossil fuel, and thus urgent review of energy supply structure is required also in order to cope with the recent global warming issue. As to the nuclear power generation that was once expected as one of the measures to resolve this, the crisis awareness for nuclear power itself about which concerns has been raised from the very beginning, as well as disposal problems of used nuclear fuel come to the front again. Because of the accident of radioactivity leakage from the nuclear power station caused by the Great East Japan Earthquake in March 2011, the review of habitual dependence on nuclear power generation is brought into an unavoidable state in a long span.

An alternative electric power supply source that can replace thermal power generation and nuclear power generation is required, but the hydroelectric power generation that performed the central role in electric power supply in the past can hardly be an immediate solution, because of the fact, especially in this country, that national land is small and geometrically appropriate places are limited, and furthermore, because of the fact that environmental destruction arising from dam construction is a problem. Particularly in case of pumping-up power generation performing a comparatively high efficiency (about 70%), two water reservoirs comprising an upper regulating reservoir and a lower regulating reservoir sandwiching a dam need to be provided. Similar situations may be considered even in foreign countries. Renewable energies such as solar power generation and wind power generation are getting a lot of attention, but since amounts of power generation through these means are largely influenced by weather or season, stable supply of electric power cannot be expected. Therefore, development of an electric power storage technology corresponding to the generated power amounts by these means becomes an immediate issue. A lead storage battery and a lithium-ion battery that belong to the existing electric power storage technology could be a solution to this issue as far as scale of electric power level is small, but when the level of electric power becomes larger, there remains problems from viewpoints of a low energy storage density (two digits lower than coal and petroleum), and of the use amount of rare metals. As such, a large scale dependence on such technologies can hardly be envisaged.

As to a fuel cell, a large scale dependence on it cannot be expected as well, from the viewpoint of safe storability of hydrogen to be used as fuel. In addition, it can be said generally for all kinds of batteries that repetition of charge/discharge brings about a change over time to thereby lower the efficiency, and thus renewal becomes necessary after a certain period of time. A problem related to disposal of a battery after use also remains. In the future, a revolutionary technology of electric power storage that can eliminate these problems seems like necessary. As a result, in order to maintain production activities and levels of life utilizing infrastructures having been built up today, it is eventually the actual response that we should rely on nuclear power generation while recognizing its risks.

For the purpose of breaking through such circumstances and realizing abundant energy supply without relying on conventional thermal power generation and nuclear power generation, establishment of a stable energy supply source supported by a technology of large-scale storage of electric power based on a new concept is now required on a global basis. The present inventors once proposed an idea of realizing an energy cycle utilizing aluminum as fuel (refer to Non-Patent literature 1), but it did not attract much attention at that time (in 1996) since there were many problems to be solved and unclear issues in practicability thereof. However, the present inventors continued honest research and development afterward and created many solutions to solve problems in the process during the course to thereby finally reach confirmation of practicability of the idea. The present inventors firmly believe that the present invention is extremely valuable in giving a ray of light toward the future of the earth, which has a potential capable of coping with both of energy crisis and global warming phenomenon that can be anticipated in the near future.

First, the outline of aluminum, which is the main element of the present invention, will be described. Aluminum is an element existing abundantly on the surface of the earth crust. According to the Clarke Number representing a weight ratio of the structure thereof, aluminum corresponds to 8.23, which is the third largest after oxygen (46.4) and silicon (28.15). This value is even larger than that of other prevailing elements such as iron (5.63), calcium (4.15), sodium (2.63) and the like. In addition, average chemical composition of alumina, or oxide of aluminum (Al₂O₃), in continental crusts accounts for 15.5% being the second largest after 59.8% of silicon dioxide, which exceeds calcium oxide (6.4%) and iron oxide (5.1%). As such, it can be said that aluminum is an element quite commonly existing anywhere on the surface of the earth. Contribution of aluminum to human beings began with discovery of alumina in the beginning of 19th century. Bonding power between aluminum and oxygen in alumina is strong, and in order to isolate aluminum by reduction of alumina, initially potassium, sodium and the like were used. Finally, in 1886, a method so called Hall-Heroult process that carries out the reduction by electrolysis was found, and even today, this process remains the main solution for refining aluminum. Specifically, alumina is extracted from bauxite that is an ore containing a lot of alumina by utilizing sodium hydroxide or the like (Bayer process), and the alumina is molten in an electrolytic bath (2,300K) using cryolite (Ga3AIF6) and aluminum is refined by electrolysis using carbon electrodes.

Al₂O₃ + 3C → 2Al + 3CO

Al₂O₃ + 3/2C → 2Al + 3/2CO₂

As the Bayer process and the Hall-Heroult process are technologies having been established already, a detailed explanation thereof will be omitted here. As is clear from the above chemical formulae, use of carbon electrodes that are necessary for reduction action causes generation of a large quantity of greenhouse effect gases such as carbon monoxide and carbon dioxide. Furthermore, for the above-described electrolysis, consumption of a large quantity of electric power for separating the strong bonding between aluminum and oxygen is inevitable (electric power consumption for producing 1 ton of aluminum: 13,000 to 14,000 kWh), which is the reason why aluminum is commonly referred to as "a lump of electricity."

The Hall-Heroult process is still the main force of aluminum refining (reduction of alumina) even today. Although various technical improvements are seen (for example, refer to "Patent Literature 1"), consumption of a large quantity of electricity and generation of greenhouse effect gases cannot be avoided. Moreover, in recent years, direct carbon-thermal reduction alternative to the Hall-Heroult process has also been proposed (for example, refer to "Patent Literature 2," and "Patent Literature 3"), but generation of greenhouse effect gases cannot be avoided since there is no change in the use of carbon as a reducing agent.

Next, the potential of aluminum when it is grasped as an energy resource (fuel) will be described. Numerical values shown below represent comparison of energy storage densities of various materials, in which kilojoule per gram (kJ/g) and kilojoule per one cubic centimeter (kJ/cm³) are used as units.

| <Material> | <kJ/g> | <kJ/cm³> |
|---|---|---|
| Aluminum | 15.5 | 41.9 |
| Coal | 41.3 | 57.8 |
| Petroleum | 60.4 | 47.2 |
| LNG | 76.9 | 33.7 |
| Hydrogen (100 MPa) | 0.60 | 0.05 |
| Lead-acid battery | 0.13 | 0.29 |
| Lithium-ion battery | 0.36 | 0.9 |

Aluminum generates a high quantity of heat when it is combusted (oxidized). As is clear from the above comparison table, when comparison is carried out per unit volume basis, the energy storage density of aluminum is almost comparable to that of petroleum, although it is slightly inferior to that of coal, but is higher than that of LNG. Furthermore, the energy storage density of aluminum is incomparably higher than the energy storage densities of hydrogen and batteries. That is, it can be said that aluminum has characteristics in the storage and conveyance thereof, which compare favorably with those of coal and petroleum. In addition, a superior point of aluminum is that even if the surface thereof comes into contact with air and is oxidized, the oxide film thereof is strong and thus the inside of the film remains as aluminum itself. In contrast to coal and petroleum in which latent energies decline due to deterioration, evaporation or the like during storage, aluminum can sufficiently meet long period storage and strategic reserve.

### Citation List

### Patent Literature

PTL 1: Published Japanese translation of PCT patent application No. 2005-536637 (*WO2004/018736)
PTL 2: US Patent No. 6440193
PTL 3: Japanese Patent Application Laid-Open No. 2006-519921 (*WO2004/018246)

### Non Patent Literature

NPL 1: Institute of Applied Energy "Fiscal 1995 Low Flue Gas Combustion Furnace Technology Development Feasibility Study Survey Report (Ministry of International Trade and Industry Agency for Natural Resources and Energy commissioned study)

As described above, the present inventors focused on potential that aluminum has as "energy resource (fuel)". The present invention aims at making it possible to use aluminum as "fuel" by establishing a technology to control combustion of aluminum and to extract energy, and furthermore to make it possible to build energy circulation cycle utilizing aluminum as "fuel", comprising refining, storing, combusting, recovering and re-producing aluminum. In particular, in the aluminum refining process, the present invention aims at providing an alumina reduction technology, with low energy and without generating gases adversely affecting environment and human body such as greenhouse effect gases, which could replace the prior art Hall-Heroult process. In the aluminum combustion process, the present invention aims at providing a stable and continuous combustion technology that can manage explosive combustion of aluminum and can effectively extract energy out of it.

The present invention solves the above-described problems by realizing stable and continuous combustion through controlling amounts of aluminum and/or oxygen to be introduced into a combusting chamber of an aluminum combusting device at the time of aluminum combustion, and by isolating aluminum through using a laser sustained plasma technology and a supersonic frozen flow at the time of aluminum reduction. Specifically, the present invention includes the following.

That is, one aspect of the present invention relates to a method for utilizing aluminum as fuel, in which aluminum is combusted and energy generated by the combustion is extracted and utilized, characterized in that aluminum powders and oxygen are introduced into a combusting chamber for causing the aluminum to be combusted, during which combustion speed is controlled so as to make combustion of aluminum stable and continuous, and that energy generated by such stable and continuous combustion of alumina is extracted for utilizing the same.

At the time of combusting aluminum in the stable and continuous condition, controlling combustion speed of aluminum may be achieved by controlling either amount of aluminum powders or amount of oxygen to be introduced into a combusting chamber, or by controlling both of these amounts.

Controlling the amount of aluminum powders to be introduced into the combusting chamber may be achieved by either controlling the amount of aluminum powders to be dragged into carrier gas used for introducing the powders into the combusting chamber, or by controlling amount of impurities to be mixed to the aluminum powders. For such purpose, alumina powders may be used as the impurity.

Controlling amount of oxygen to be introduced into the combusting chamber may be achieved by controlling mixing ratio of the oxygen relative to dilution gas which is to be introduced together with the oxygen.

Means for extracting energy generated by the stable and continuous combustion may be structured by either driving gas turbine or driving steam turbine, or driving both of the turbines by using the combustion gas. Consequently, energy generated by the combustion of aluminum can be utilized for electric power generation, or as motive power.

The method for utilizing aluminum as fuel may further includes either a step of alumina reduction for reducing alumina to thereby generate aluminum, or a step of re-production of aluminum for treating aluminum waste materials to thereby re-produce aluminum powders, before the step of combusting aluminum in the stable and continuous condition.

The step of alumina reduction may comprises a step of thermal dissociation in which alumina powders are heated using heating means such as laser beam to make it into plasma state so as to dissociate alumina powders into aluminum and oxygen, and a step of isolating aluminum by emitting the gas in the plasma state in a supersonic jet stream to thereby convert the gas into frozen flows. At this time, hydrogen may be added to the operating gas so as to promote reduction of alumina by the effect of the hydrogen.

After the step of alumina reduction or the step of re-production of aluminum, and before the step of combusting aluminum in the stable and continuous condition, the method may further comprise either one of steps of transporting, storing or strategically reserving the aluminum powders that are obtained by the alumina reduction, or obtained by the re-production of aluminum. A step of recovering alumina created by the stable and continuous combustion of aluminum may be further added after a step of extracting energy generated by the stable and continuous combustion of aluminum. The alumina recovered in such a step may be recycled and used in the step of alumina reduction. When these steps are added, energy cycle utilizing aluminum may be established.

Implementation of the present invention makes it possible to effectively use energy obtained by combustion of aluminum through using aluminum as fuel. For example, when aluminum is utilized for electric power generation, it becomes possible to supply stable electric power without discharging greenhouse effect gases and without being influenced by weather, which may not be achieved by the other conceivable renewable-energies. Furthermore, the present invention provides a powerful candidate of energy resource that responds to an energy crisis in the future owing to the fact that aluminum can be recovered and re-utilized after combustion, and can be stored stably for a long period of time.
[Fig. 1] Flow-chart showing outline of aluminum energy cycle according to one embodiment of the present invention.
[Fig. 2] Schematic drawing showing a device for combusting aluminum in a stable and continuous condition according to another embodiment of present invention.
[Fig. 3] Schematic structural drawing showing combined electricity generating device by which electricity is generated through combusting aluminum.
[Fig. 4] Explanatory drawing showing outline of method for reducing aluminum according to yet another embodiment of the present invention.

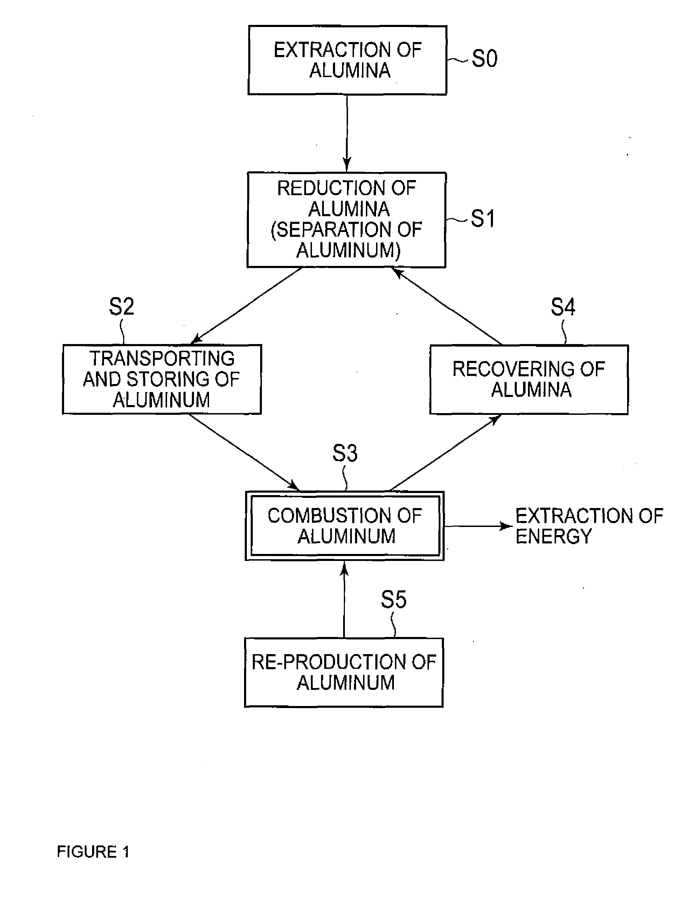

A novel method of energy circulation for generating energy by circulating aluminum, including a method for utilizing aluminum as fuel (hereinafter referred to as ""aluminum energy cycle) according to the first embodiment of the present invention will now be described by referring to appended drawings. Fig. 1 shows outline of overall aluminum energy cycle utilizing aluminum according to the present embodiment. Referring to Fig. 1, Step (symbolized by "S" in the drawing) 0 shows a process for extracting alumina (aluminum oxide) from ore containing aluminum (such as bauxite), which may be performed by prior art technologies (such as the Bayer process).

In Step 1, aluminum is extracted by reducing alumina. As for aluminum to be used as fuel in the present invention, high purity aluminum such as 99.9% purity required for refining aluminum for industrial usage is not necessary, but rather aluminum containing impurities such as alumina or the like up to a certain percentage may be used. In this process, aluminum reduction by means of the prior art Hall-Heroult process may be used, or a novel aluminum reduction method relating to the present invention, which will be described later (in the third embodiment) may also be used. Since a large amount of electricity is consumed for reducing alumina, it is desirable to perform this process in a territory where electricity price is low. For example, if a large scale of solar power generating system is prepared in an area selected for such purpose where sun shining time is long and climate condition is stable, and alumina reduction is performed by utilizing electricity generated locally, such area would possibly become an "energy-producing country (area)" which is comparable to presently existing "oil-producing countries".

The next Step 2 is provided for transporting aluminum as "energy source" obtained in Step 1 to areas (countries) where such energy is demanded and to be stored. Since oxide film is formed on surface of aluminum which protects inside thereof, condition of aluminum afterward is stable, and therefore storing such aluminum is rather easy. Further, when compared to present fossil fuel, aluminum is more suitable for long term storage since quality change due to such long term storage, reduction of volume due to evaporation, or creation of nasty smell can effectively be avoided. For this reason, aluminum under such condition may be referred to as "aluminum fuel", and may be considered as energy source. Common problem that should be taken care of at any time when handling powdered materials is to avoid a dust explosion. Administering storage volume, temperature, humidity, etc. is required for this purpose, but since aluminum is under stable condition, such risk is not so high when compared to other materials such as magnesium which may easily catch fire by only pouring water on it.

In the next Step 3, energy is extracted by combusting aluminum stored in Step 2. Since it is known that combustion of aluminum is explosive, extracting energy out of aluminum was difficult in prior art. Some examples of using aluminum in the past are gunpowder for star shells or flash shells, or rocket engines in which rapid expansion due to explosive combustion is used. However, idea for utilizing aluminum by combusting under stable and continuous condition, and making use of it as energy source or fuel has not been realized in the past. The present invention makes it possible to extract energy effectively by controlling combusting speed during aluminum combustion, and combusting aluminum under stable and continuous condition, which will be further described in the second embodiment. In step 3, aluminum is oxidized by combustion, and it returned to alumina (aluminum oxide).

In the next Step 4, alumina is recovered after combustion. Melting point of alumina is 2,300K, and combusting gas containing molten alumina is cooled after being used for driving gas turbine or steam turbine, and solidified alumina in a dust condition may be collected by using filter or the like. Other materials contained in the exhaust gas after combustion are only oxygen and inert gas that is used as carrier gas or diluting gas, and no harmful materials to environment or human being are contained. Recovered alumina is collected and returned to "alumina reduction" process of Step 1. As a result, "aluminum energy cycle" can be structured through Step 1 to Step 4 in which aluminum is circulated.

Step 5 shows a process in which alumina reduction is not required, or utilizing re-produced aluminum as a fuel in addition to alumina reduction. A large volume of aluminum is found in the market in a form such as industrial products, construction materials, food cans, etc., and recovering such materials and re-producing aluminum out of them is being carried out even today. According to such aluminum re-producing technology, it is said that electric consumption for re-producing is only 3% relative to alumina reduction process in prior art (the Hall-Heroult process). Therefore, if used aluminum is recovered in the market and aluminum fuel is re-produced, such re-produced aluminum can perform extremely significant role as energy resource. In the flow shown in Fig. 1, although re-production of aluminum in Step 5 is connected to combustion of aluminum in Step 3, it may be connected to transporting and storing of alumina in Step 2.

The following summarizes significant merits of the above mentioned method for extracting energy out of aluminum, and overall aluminum energy cycle including combusting, recovering, reducing, re-producing of aluminum, when compared to prior art energy generating methods.
1. Aluminum to be used as fuel is abundant resource, and re-producing aluminum is also possible. While coal, petroleum, or LNG is distributed unevenly on earth, any country can possibly be an "energy producing country" as far as the country has alumina refining technology. Further no precious material such as lithium is required, which is also distributed unevenly on earth.
2. Aluminum is fundamentally different from other fossil fuels in that it can be recycled.
3. Since oxide film is formed on surface of aluminum which protects inner side thereof in a stable condition, storing of aluminum is easy. No unfavorable phenomena such as quality change or evaporation takes place, hence it is suitable for long term storage.
4. Electricity supply becomes stable when aluminum is utilized as energy source. While other re-producible energy such as solar power generation or wind power generation are vulnerable to natural conditions which leads to unstable electric power supply, utilization of aluminum makes it possible to supply required amount of electric power at any time, hence storing means such as battery is no longer needed.
5. Aluminum is not harmful to human being, and does not contaminate environment. It has nothing to do with radio activity, which is fundamental difference compared to nuclear power generation. Created material as a result of combustion is aluminum oxide which is non-harmful and stable material. In this perspective, it is different from fossil fuels that create a large volume of greenhouse effective gas, and further it is remote from electricity storing technology where harmful materials such as lead or lithium are to be used.

General view of "aluminum energy cycle" according to the present embodiment has been described, which portrays basic conception of the present invention focusing on circulating aluminum and effectively utilizing aluminum as energy resource. However, all of the Steps 0 to 5 are not necessarily mandatory elements of the present invention. The core of the present invention is to realize "stable and continuous combustion of aluminum" in Step 3, and other elements may be considered as accompanying elements to Step 3. For example, alumina reduction process in step 1 can be performed by already established methods such as the Hall-Heroult process or other reduction methods even if they involve in some issues to be solved, but aluminum obtained through such prior art reduction methods can also be used for the stable and continuous combustion in Step 3. Further, transporting and storing of aluminum in Step 2 is an element necessary for the case when each of alumina reduction and aluminum combustion is separately performed in different countries or areas, or for the case when aluminum itself needs to be stored as fuel for some reasons. Therefore, this step is not necessarily required for the case when reduction of alumina and stable and continuous combustion of aluminum are carried out in a consistent manner.

Further, recovering of alumina in Step 4 is an element required for performing aluminum energy cycle according to the present embodiment, but it is also possible not to recover alumina created after combustion, but rather it may simply be discharged to the atmosphere as a part of aluminum containing components already widely spread on the surface of the earth crust. Since alumina is not harmful to environment as well as human body which is similar to other components included in the combustion gas such as oxygen and carrier gas (inert gas), basically there should not be any problem to discharge created alumina to the atmosphere without making any treatment.

In the past, technology of grasping aluminum as energy source or fuel is very limited, especially, extracting energy out of aluminum not through its explosive combustion but through stable and continuous combustion is a novel technological conception, and aluminum energy cycle as a whole including combusting aluminum, recovering and reducing alumina is also a novel technological conception. Also, it can be said such novel technological conceptions may be utilized extremely effectively from industrial view point.

Next, the second embodiment according to the present invention is now described by referring to appended drawing. The present embodiment relates to a technology of "combustion of aluminum", which is shown in a double-lined-box in Fig. 1. As described above, since combustion of aluminum tends to be explosive, it is necessary to control speed of combustion so as to make it in a stable and continuous manner (hereinafter in the present specification, it is referred to as "stable and continuous combustion") for the purpose of effectively extracting energy out of aluminum. The term ""stable and continuous combustion" is the extreme opposite relative to "explosive combustion (non-stable and non-continuous combustion)", and it means that combusting speed is maintained under controllable condition, and that such controlled combustion may be kept for a certain length of time.

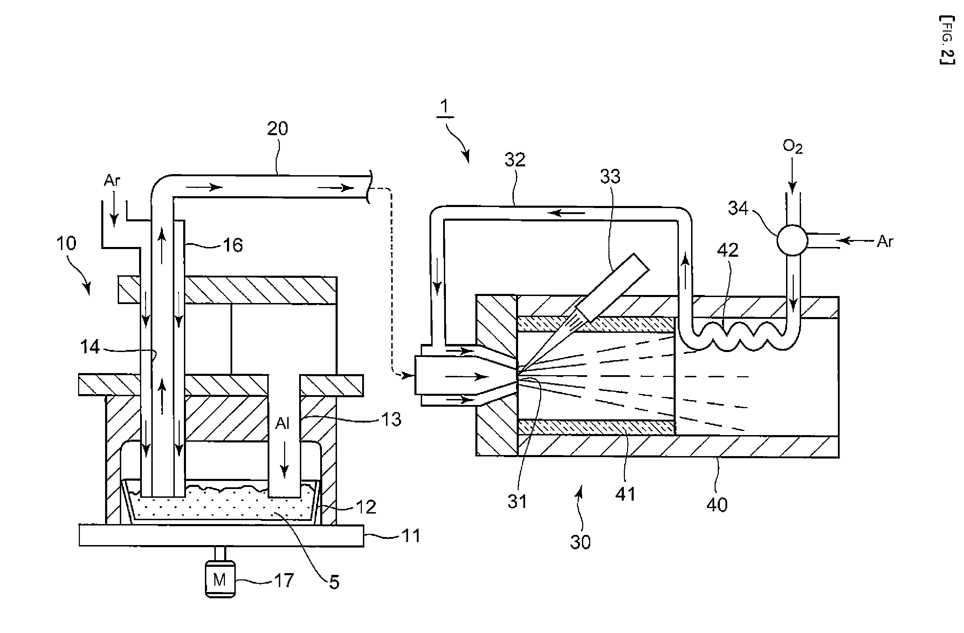

Fig. 2 shows one example of aluminum combusting device 1 for making stable and continuous combustion of aluminum possible. By referring to Fig. 2, aluminum combusting device 1 is mainly structured by aluminum supplying section 10, and aluminum combusting section 30. Among these sections, the aluminum supplying section 10 is configured to supply proper volume of aluminum powders (hereinafter, it may also be referred to as "aluminum fuel") 5 to the aluminum combusting section 30, and is comprising, from lower portion to upper portion, a turn table 11, a fuel container 12 placed on the turntable 11 for holding aluminum fuel 5, a fuel releasing tube 13 for supplying aluminum fuel 5 into the fuel container 12, a fuel supplying tube 14 for dragging in aluminum fuel 5 from the fuel container 12, and a carrier gas supplying tube 16 for supplying carrier gas to be used for dragging in and transporting aluminum fuel 5.

The turn table 11 is rotated by a motor 17, which rotational speed can be controlled by a controller not shown in the drawing. Proper volume of aluminum fuel 5 is released in a timely manner into the fuel container 12 through the fuel releasing tube 13. As an example, a sensor (not shown in the drawing) may be provided to lower end of the fuel releasing tube 13, which detects level of aluminum fuel 5 so as to keep the fuel level constant at a predetermined height. Aluminum fuel 5 in fuel releasing tube 13 can be replenished from upper side thereof continuously. Example of the fuel supplying tube 14 and the carrier gas supplying tube 16 shown in the drawing is formed as a double-tube configuration, and carrier gas such as argon or helium is supplied in downward direction from upper side in the carrier gas supplying tube 16 formed at outer side of the double-tube. The double-tube is positioned at a level just contacting aluminum fuel 5 in the fuel container 12 or in the vicinity thereof, therefore aluminum fuel 5 is dragged into the fuel supplying tube 14 by means of carrier gas pressure in upward direction, and further transported to the aluminum combusting section 30 through a connecting tube 20.

The aluminum combusting section 30 on the other hand includes: a fuel nozzle 31 for emitting fuel mixture gas including aluminum fuel 5 and carrier gas into a combusting chamber 40, an oxygen supplying tube 32 in a form of double-tube surrounding the fuel nozzle 31 for supplying oxygen, and an igniting structure 33 which is configured to ignite aluminum fuel 5 by means of torch flame in the present example. The oxygen supplying tube 32 is connected to an oxygen supplying source located outside of the device and not shown in the drawing. Although only one nozzle formed in double-tube configuration is shown in the drawing, a plurality of smaller nozzles having a similar configuration may be provided.

Actions of the aluminum combusting device 1 as structured above according to the present embodiment is now be described, especially together with a method of controlling for achieving stable and continuous combustion. First, aluminum fuel 5 is released into the fuel container 12 through the fuel releasing tube 13 in the aluminum supplying section 10, and then the turn table 11 is rotated by the motor 17. Next, pressurized carrier gas is supplied from upper side of the carrier gas supplying tube 16, and aluminum fuel 5 is dragged by stream of the carrier gas at the vicinity of lower end of the double-tube, and is forced into the fuel supplying tube 14, which mixed gas is then supplied to the aluminum combusting section 30 through the connecting tube 20. In the aluminum combusting section 30, oxygen is supplied into the oxygen supplying tube 32, and mixture including aluminum fuel 5 and oxygen is ignited by the igniting structure 33, which leads to initiation of combustion of the aluminum fuel 5. Thereafter, aluminum fuel 5 that is supplied one after another is continuously combusted, and created high temperature and high pressure gas is guided to right direction of the drawing into the combusting chamber 40, which is then guided to energy generating device such as an electricity generating gas turbine. This will be discussed at a later stage.

During the above mentioned actions, any of the following controlling measures may be adapted for the purpose of achieving stable and continuous combustion under controlled combusting speed instead of explosive combustion of aluminum.
1. Controlling carrier gas supplying pressure: A pressure controlling valve is provided at upper stream of the carrier gas supplying tube 16, and controls pressure of supplied carrier gas. Increase or decrease of supplying pressure leads to increase or decrease of volume of aluminum fuel 5 to be dragged into the fuel supplying tube 14. As an example, the pressure is controlled at about 100kPa - 1 Mpa, desirably at about 300 to 600kPa.
2. Controlling rotational speed of the turntable 11: Volume of aluminum fuel 5 to be dragged in by means of the carrier gas can be controlled by controlling the rotational speed. Alternatively, it is possible to make the turntable 11 movable in up-and-down directions instead of rotating, and to control relative height between the fuel supplying tube 14 and the fuel container 12 so as to adjust depth level of the fuel supplying tube 14 inside of the aluminum fuel 5. Supplying rate of the aluminum fuel 5 is to be controlled at fuel air equivalence ratio of about 0.2 to 1.1 relative to supplied oxygen volume, and more desirably at a ratio of about 0.5 to 0.8. Diameter of aluminum powder, or aluminum fuel 5, is to be about 0.1 - 30µm, and more desirably about 1 - 10µm.
3. Adding elements to aluminum fuel 5 that may mitigate combustion: For example, instead of using only pure aluminum powders for aluminum fuel 5, adding alumina powders up to a certain ratio. Alumina may absorb a part of energy when it is being reduced during combustion, which would help making combustion stable and continuous state. Possible way for supplying alumina is to mix it at predetermined ratio to aluminum fuel, or to add a releasing tube similar to the fuel releasing tube 13 and to supply required volume of alumina into the fuel container 12 under controlled condition through such a tube. Some other impurities that may mitigate combustion, such as water (steam), may be added instead of alumina.
4. Controlling supplying volume of mixture gas comprising carrier gas and aluminum fuel: A pressure regulating valve may be provided to the connecting tube 20 which can be used just like a throttle valve for controlling supplying volume of the mixture gas.
5. Controlling density of oxygen in the oxygen supplying tube 32: A changing valve 34 may be provided at upstream of the oxygen supplying tube 32 for mixing diluting gas comprising inert gas such as argon under controlled condition to oxygen, thereby density of oxygen may be diluted. Controlling volume mixture ratio between oxygen and diluting gas can be made in such a manner that, at a time of supplying predetermined volume of oxygen to the oxygen supply pipe 32 (volume equivalent ratio of oxygen relative to aluminum fuel supply volume is to be controlled between about 0.2 to 1.1, and more desirably about 0.5 to 0.8), oxygen is supplied at a pressure similar to that of the diluting gas (100kPa to 1Mpa, more desirably 300kPa to 600kPa).
6. Controlling temperature of combusting chamber at aluminum combusting section: Temperature of combusting section 30 is maintained at a temperature that aluminum may ignite by itself, and wall surface in the combusting chamber is insulated by low thermal conductivity material 41, such as ceramics. The low thermal conductivity material 41 is kept at a high temperature due to radiation of aluminum combustion, which contributes to the stable and continuous combustion. Further, a heat exchanger 42 may be provided at upstream of the oxygen supplying tube 32, and supplied oxygen may be pre-heated by a part of heat generated in the combusting chamber 40. As an example, temperature of the aluminum combusting section is controlled at about 600K to 1,200K, more desirably at about 800K to 1000K.

By using either one of the above-described controlling measures or any combination thereof, combusting speed of aluminum can be controlled so that the combustion of aluminum becomes stable and continuous. As to controlling system for this purpose, a temperature sensor or a pressure sensor (not shown in the drawing) may be provided in the combusting chamber 40, and its output may be provided to necessary controlling device for operating the above controlling measures. In case of emergency during combustion of aluminum fuel 5, such combustion of aluminum may be instantly ceased by stopping aluminum fuel 5 supply, or carrier gas supply. Even in such an instance, radio activity or harmful gas would never be released at all.

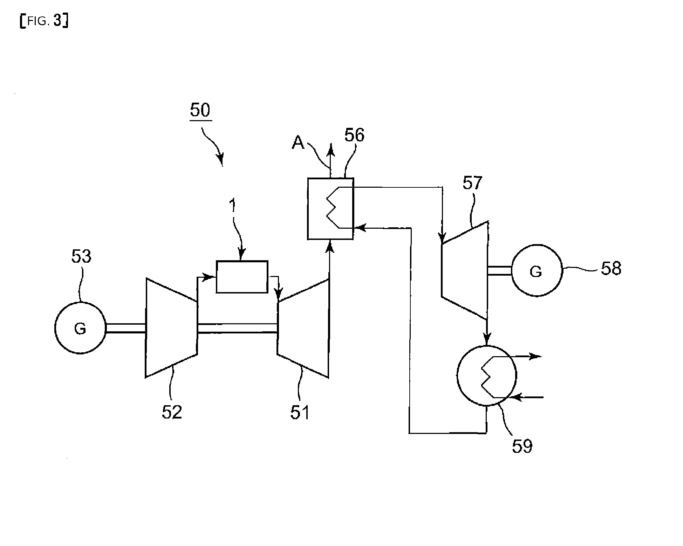

Fig. 3 shows one example of a generator 50 for generating electric power which can be driven by high temperature and high pressure gas obtained by aluminum combustion. The drawing shows an example of combined generator comprising a gas turbine generator area on left hand side, and a steam turbine generator area on right hand side in the drawing. At the gas turbine generator area on left hand side of Fig. 3, a gas turbine 51 is connected to the aluminum combusting device 1 as shown in Fig. 2, and the gas turbine 51 is operated by combustion gas. Rotation of the gas turbine 51 is transmitted to a connected compressor 52 through connecting shaft (or gear may be used), and further to a first generator 53 which generates electricity. Pressure created by the compressor 52 may be returned to the aluminum combusting device 1, which is used as pressure for pressurizing combusting gas.

On the other hand, in the steam turbine generator area, combustion gas after operating the gas turbine 51 is guided to a heat exchanger 56 where steam is generated. The combustion gas after being used for heat exchange may be discharged into atmosphere as shown by an arrow A, or may be recovered for recycling. Steam generated by the heat exchanger 56 operates the steam turbine 57 which rotates a second generator 58 for generating electricity. Steam is thereafter returned to water by condenser 59, and is circulated for another cycle. Heat obtained at the condenser 59 may effectively be used for other purposes. Basic structure of the generator 50 described here is similar to the combined generator operated by fossil fuels, except that the aluminum combusting device 1 is being used. Although above mentioned example describes a case where energy created by aluminum combustion is used for generating electric power, it could be used for other purposes such as gas/steam turbine engine for industrial usage as a fixed apparatus, or for driving a motive engine such as a ship.

Next, the third embodiment according to the present invention is now described by referring to appended drawings. The present embodiment relates to a method for reducing alumina shown as Step 1 in Fig. 1. As described above, aluminum to be used for combustion according to the present invention can be the aluminum that is reduced by the prior art Hail-Heroult process, but alumina reduction by the Hall-Heroult process consumes a large amount of electric power, and creates a large volume of greenhouse effect gas as well. It is most desirable to extract energy when using aluminum as fuel is to be made by a method that would not create any materials causing contamination to the environment. According to the present embodiment, a novel method for reducing alumina is used for obtaining aluminum to be utilized for the aluminum energy cycle as shown in Fig. 1, which would completely prevent emitting any greenhouse effect gas at all, and moreover would improve efficiency of electric power consumption.

The above described method for reducing alumina is not necessarily be a mandatory factor for the method for utilizing aluminum as fuel, or for the aluminum energy cycle according to the present invention. The invention of the method for reducing alumina according to the present embodiment is treated as another patent application that was filed separately from the present invention, therefore the present embodiment relates to one application of such method for reducing alumina to the aluminum energy cycle according to the present invention.

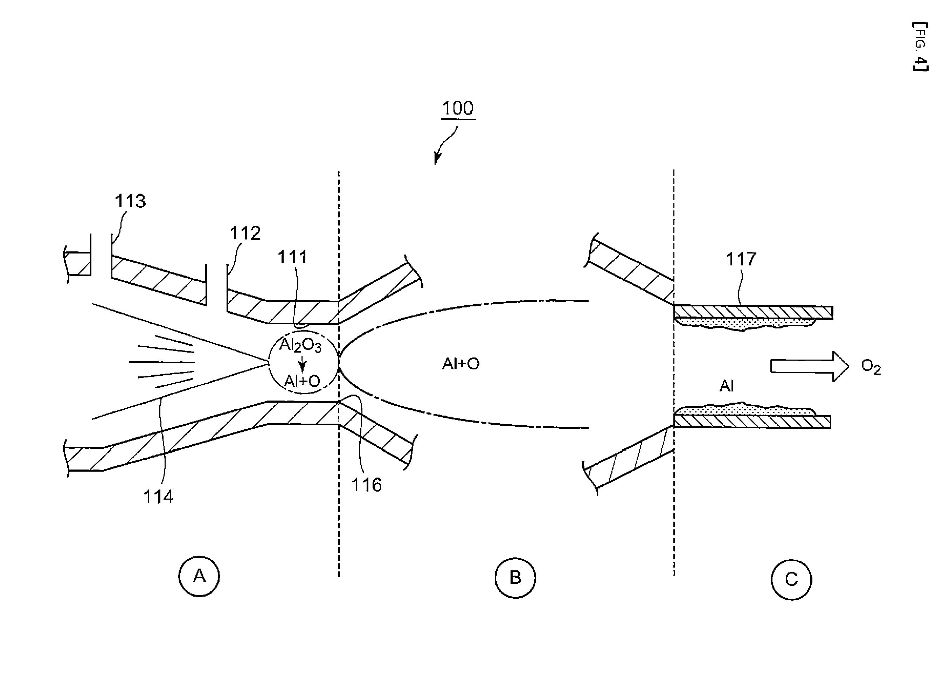

Fig. 4 shows outline of the method for reducing alumina according to the present embodiment, which is structured by a step of thermally dissociating alumina in area A shown in left hand side of the drawing, a step of separating aluminum and oxygen from each other, and isolating alumina in area B shown in the central portion, and a step of recovering isolated aluminum in area C on right hand side of the drawing. Each of these areas is divided by dotted lines in the drawing, and each step flows from left hand side to right hand side.

First, at a step of thermally dissociating alumina in area A on left hand side, a throat portion 111 for throttling flow inside a reducing device 100 is provided, and an alumina feeding gate 112 at upstream (left side of the drawing) thereof as well as an operating gas introducing gate 113 at even further upstream thereof are provided. Alumina powders are fed into the device through the alumina feeding gate 112 together with carrier gas such as argon, and pressurized operating gas comprising oxygen and inert gas such as argon gas is introduced through the operating gas introducing gate 113. Mixture of alumina and carrier gas to be fed through the alumina feeding gate 112 is properly controlled in such a manner that contained alumina volume becomes about 0.1 - 0.6g/l (l: little), as an example. Pressure of the operating gas to be introduced from the operating gas introducing gate 113 is desirably about 10 atm. Mixture of alumina and carrier gas is transported by pressure of the operating gas toward the throat portion 111.

A laser beam 114 is irradiated from left side of the drawing focusing on the throat portion 111. In the present embodiment, carbon di-oxide gas laser of maximum power output of 2kw, wavelength of 10.6µm, and beam diameter of 34mm is used, but such dimensions may be changed as far as enough energy for making alumina into plasma state can be achieved. Area in the vicinity of focal point of the laser beam is heated locally up to 12.000K and alumina is melt by such high temperature heat (melting point of alumina is 2,300K) and is converted into plasma state, by which thermal dissociation of alumina into aluminum and oxygen takes place. At this stage, a phenomena so called inverse bremsstrahlung radiation is generated in which atom is accelerated through absorbing beamed laser power, and plasma is heated by repeated coulomb collision among atoms and ions.

Al₂O₃ = 2Al + 3/2O₂ - 838kJ

Operation is then moved to area B located in the center of the drawing, in which gas in the plasma state, expanded by heating and throttled at throat portion 111, is ejected in jet stream from a nozzle 116 which is an exit of the throat portion 111 toward right hand side of the drawing. Gas flow at this stage becomes supersonic flow in a speed of such as 1,000-3,000m/s, and the gas flow is instantly cooled due to rapid expansion. In case of the prior art Hall-Heroult process, among electrolyzed alumina elements, oxygen is separated by being drawn by anode and combines with carbon, thereby being isolated in a form of carbon monoxide or carbon dioxide, and only remaining element, which is aluminum, is deposited in the electrolytic bath and is collected. However, in case of no reducing agent such as carbon electrode is provided, even if alumina is once thermally dissociated into aluminum and oxygen, aluminum and oxygen having strong bonding force among each other tend to re-combine and return to alumina during cooling process. On the other hand, according to the present embodiment, since separated aluminum and oxygen in plasma state are rapidly cooled in frozen supersonic gas flow down to normal temperature, re-combination of aluminum and oxygen is blocked and their separated condition is maintained. Such fact can be confirmed by emission spectrum measurement by which peak of emission spectrum unique to aluminum is observed.

Thereafter, the flow moves to area C on right hand side of the drawing, and only isolated aluminum is recovered. In the example shown in the drawing, a cooled copper tube 117 is used into which the flow is guided and separated oxygen in gaseous state is discharged while aluminum is accumulated on inner wall of the copper tube 117 and collected. Such method for recovering is just an example, and some other methods may be adopted, such as using a filter capable of selectively permeating oxygen and capturing aluminum powders.

For guiding and feeding controlled volume of alumina powders to the alumina feeding gate 112, a structure similar to the aluminum supplying section 10 as described in the embodiment 1 and shown in Fig. 2 may be used. In this case, the fuel container 12 is replaced by an alumina container, and the fuel releasing tube 13 may be used as alumina releasing tube. In the present embodiment, alumina powders having a diameter of about 0.03 to 3µm may be used, but for controlling volume of alumina powders to be supply in a steady condition, it is desirable to select almost the same size of alumina powders in a single batch treatment.

One conceivable modified application of the method for reducing alumina according to the present embodiment is to add hydrogen to the operating gas to be introduced from the operating gas introducing gate 114, and to promote alumina reduction by means of the hydrogen. When hydrogen is added, oxygen contained in alumina would combine with such hydrogen to thereby create H₂O, which can be discharged later, but any gas harmful to environment would not be created by such process.

Al₂O₃ + 3H = 2Al + 3H₂O - 112kJ

By adding hydrogen and making use of it as a reducing agent, alumina reduction may be achieved by even fewer energy consumption compared to a case where only alumina is directly dissociated and separated. According to an experiment conducted by the present inventors, in order to perform alumina reduction by an energy equivalent to that is required for the Hall-Heroult process (20mg/kJ), only 30% of effective usage of laser energy would be enough for the case of direct thermal dissociation of alumina, and for the case when hydrogen is added, as low as 4% of effective usage of the energy would be enough to achieve the similar efficiency of the prior art. Since about 35% of energy efficiency can be expected according to the method for reducing alumina of the present embodiment, it can be expected that embodiment by any one of these cases of the present invention may achieve higher energy efficiency compared to the Hall-Heroult process. The present embodiment can not only prevent creation of greenhouse effect gas, but also can save electric power consumption as well.

In the above mentioned example, laser beam is used as heating means for reducing alumina in the thermal dissociation process instead of electrolysis in the prior art, but the present invention is not limited thereto, and some other heating means may also be utilized. Some of such examples are: arc discharge and inductively-coupled plasma. However, in case of using arc discharge, electrodes (tungsten or cupper) are consumed, and operation in oxygen environment is prohibited. In case of using conductively-coupled plasma, operating pressure is limited to less than 1 atm, and it has a problem of interference with generated aluminum. By the laser sustained plasma means according to the present embodiment, operation in oxygen atmosphere is possible since no material to be consumed such as electrode exists, and operating pressure can be kept at a high level (up to about 10 atm), therefore the method of present invention is more suitable for achieving frozen supersonic flow.

### Example 1

Stable and continuous combustion of aluminum according to embodiment 2 is conducted under the following assumption:
- Pressure of carrier gas supply: 110kPa
- Supply volume of aluminum powders: volume ration relative to oxygen is 0.7
- Temperature of supplied oxygen: 750K
- Diameter of aluminum powders: 1µm
- Temperature of aluminum combusting chamber: kept at 800k as a targeted temperature, while inner wall of the chamber is coated by ceramic.

Aluminum and Oxygen mixture gas under the above condition is ejected in a jet stream and ignited by using a torch flame. Stable and continuous combustion of aluminum was confirmed for about 1 minute.

### Example 2

Reducing alumina according to the embodiment 3 is conducted under the following assumption:
- Laser specification: continuous wave carbon dioxide gas laser of 1KW power is used, wave length: 10.6µm, beam diameter: 34mm, and lens: f95.
   Throat specification: throat diameter: 1 mm, and nozzle exit: 10mm.
- Flow rate of alumina powder: 10% weight ratio relative to the carrier gas (argon)
- Diameter of alumina powder: 3µm

As a result, peaks of emission spectrum evidencing existence of aluminum (257nm, 309nm, 396nm) are observed, through which isolation of aluminum was confirmed.

### Industrial applicability

The method for utilizing aluminum as fuel according to the present invention may be widely used in the industries such as energy supplying industry, mainly in a field of generating electric power, in the industry of using motive power source, such as manufacturing fields or in the shipping field, etc., and all other industries where energy is demanded or energy is consumed.

### Explanation of reference numerals

1. aluminum combusting device, 5. aluminum fuel (aluminum powders), 10. aluminum supplying section, 11. turntable, 12. fuel container, 13. fuel releasing tube, 14. fuel supplying tube, 16. carrier gas supplying tube, 17. motor, 20 connecting tube, 30. aluminum combusting section, 31. fuel nozzle, 32, oxygen supplying tube, 33. igniting structure, 34. changing valve, 40. combusting chamber, 41. low thermal conductivity material, 42. heat exchanger, 50. generator, 51. gas turbine, 52. compressor, 53 first generator, 56. heat exchanger, 57. steam turbine, 58. second generator, 59. condenser, 100. reducing device, 111. throat portion, 112. alumina feeding gate, 113. operating gas introducing gate, 114. laser beam, 116. nozzle, and 117. copper tube.

## Claims

1. A method for utilizing aluminum as fuel, in which aluminum being combusted and energy generated by the combustion being extracted and utilized,
**characterized in that** aluminum powders and oxygen are introduced into a combusting chamber for causing the aluminum to be combusted, during which combustion speed is controlled so as to achieve stable and continuous combustion of aluminum, and that energy generated by such stable and continuous combustion of alumina is extracted for utilizing the same.

2. The method for utilizing aluminum as fuel according to claim 1, wherein, at the time of combusting aluminum in the stable and continuous condition, controlling combustion speed of aluminum is achieved by controlling either amount of aluminum powders or amount of oxygen to be introduced into a combusting chamber, or by controlling both of these amounts.

3. The method for utilizing aluminum as fuel according to claim 2, wherein controlling the amount of aluminum powders to be introduced into the combusting chamber is achieved by either controlling the amount of aluminum powders to be dragged into carrier gas used for introducing the powders into the combusting chamber, or by controlling amount of impurities to be mixed to the aluminum powders.

4. The method for utilizing aluminum as fuel according to claim 3, wherein the impurity is either alumina powders, water, or steam.

5. The method for utilizing aluminum as fuel according to claim 2, wherein the controlling amount of oxygen to be introduced into the combusting chamber is achieved by controlling mixing ratio of the oxygen relative to dilution gas which is to be introduced together with the oxygen.

6. The method for utilizing aluminum as fuel according to claim 1, wherein means for extracting energy generated by the stable and continuous combustion is either driving gas turbine or driving steam turbine, or driving both of the turbines by using the combustion gas.

7. The method for utilizing aluminum as fuel according to claim 1, wherein the method further includes either a step of alumina reduction for reducing alumina to thereby generate aluminum, or a step of re-production of aluminum for treating aluminum waste materials to thereby re-produce aluminum powders, before the step of combusting aluminum in the stable and continuous condition.

8. The method for utilizing aluminum as fuel according to claim 7, wherein the step of alumina reduction comprises a step of thermal dissociation in which alumina powders are heated using heating means to make it into plasma state so as to dissociate alumina powders into aluminum and oxygen, and a step of isolating aluminum by ejecting the gas in the plasma state in a supersonic jet stream to thereby convert the gas into frozen flows.

9. The method for utilizing aluminum as fuel according to claim 8 , wherein hydrogen is added to the operating gas so as to promote reduction of alumina by the effect of the hydrogen.

10. The method for utilizing aluminum as fuel according to claim 7, wherein, after the step of alumina reduction or the step of re-production of aluminum, and before the step of combusting aluminum in the stable and continuous condition, the method further comprises either one of steps of transporting, storing or strategically reserving the aluminum powders that are obtained by the alumina reduction, or obtained by the re-production of aluminum.

11. The method for utilizing aluminum as fuel according to claim 1, wherein a step of recovering alumina created by the stable and continuous combustion of aluminum is further added after a step of extracting energy generated by the stable and continuous combustion of aluminum.

12. The method for utilizing aluminum as fuel according to claim 7, wherein the alumina to be used in the step of aluminum reduction is the alumina that is created after the stable and continuous combustion of aluminum and is collected.
